# EUROPÄISCHE PATENTSCHRIFT

(11) **EP 1 915 279 B1**
(45) Veröffentlichungstag und Bekanntmachung des Hinweises auf die Patenterteilung: **11.03.2009**
(21) Anmeldenummer: 06762764.6
(22) Anmeldetag: 21.07.2006
(51) Int. Cl.: B60R 21/16

(54) **AIRBAGEINHEIT**
AIRBAG UNIT
UNITE AIRBAG

(30) Priorität: 18.08.2005 DE 102005039451
(43) Veröffentlichungstag der Anmeldung: 30.04.2008
(73) Patentinhaber: AUTOLIV DEVELOPMENT AB, 447 83 Vargarda (SE)
(72) Erfinder: JACOBSSON, Börje, S-507 31 Brämhult (SE); KJELL, Fredrik, S-441 40 Alingsas (SE); BERNTSSON, Mats, S-414 61 Göteborg (SE)
(74) Vertreter: Stornebel, Kai
(86) Internationale Anmeldenummer: PCT/EP2006/007222
(87) Internationale Veröffentlichungsnummer: WO 2007/019940

(56) Entgegenhaltungen:
- WO-A-20/05049390
- GB-A- 2 394 921
- US-A1- 2005 082 798
- US-A1- 2005 104 335

## Beschreibung

Die Erfindung betrifft eine Airbageinheit mit einem Airbag aus einem Gewebe, der mit einem Gasgenerator zum Aufblasen und Entfalten des Airbags aus einem eingerollten oder zusammengefalteten Zustand in einen entrollten oder entfalteten Aktivierungszustand gekoppelt ist. Der Airbag weist Befestigungseinrichtungen zur Festlegung des Airbags an einem Kraftfahrzeug auf.

Solche Airbageinheiten sind insbesondere als Seitenairbags oder sogenannte "Vorhangairbags" ausgebildet, die in Türinnenverkleidungen angeordnet sind.

Um solche eher lang gestreckten Airbags beim Transport und während der Montage zu schützen, werden diese in eine vorgefertigte Tasche eingeschoben, was einen erhöhten Montageaufwand aufgrund der notwendig manuell durchzuführenden Tätigkeit bedeutet.

Aus der GB-2,309,942 A1 ist ein Airbag bekannt, bei dem jenseits einer von einer Umfangsnaht gebildeten Kammer des Gassackes Gewebeabschnitte vorhanden sind, die zurückgeschlagen und miteinander vernäht sind, um den die Kammer ausbildenden Teil des Airbag in gefalteter Form darin aufzunehmen. Nachteilig hieran ist der hohe Arbeitsaufwand beim Umschlagen und Vernähen der überstehenden Gewebeabschnitte. Ebenfalls ist eine solche Ausbildung sehr teuer, da zur Ausbildung der Umhüllung das teure Airbag-Spezialgewebe verwendet wird.

Die US2005/0104335 A1 beschreibt ein Airbagmodul mit einem Gasgenerator und einem Airbag sowie einer Rückhaltevorrichtung, die den Airbag bis zur Entfaltung in einem verstauten Zustand hält. Die Rückhalteeinrichtung ist um den Airbag herum gewickelt und mit einem Klettverschluss festgelegt. Wird der Gasgenerator gezündet, bläst sich der Airbag auf und löst den Klettverschluss

Die WO 2005/049390 A1 betrifft eine Airbageinheit mit einem aufblasbaren Vorhang, der in der Ausgangsstellung eingerollt ist. Um den aufblasbaren Vorhang in dieser Stellung zu sichern, ist eine Textilabdeckung in Gestalt einer Umhüllung vorgesehen, die an einem nicht aufblasbaren Teil des Airbags mit einer Reißnaht befestigt ist. Statt einer Reißnaht kann eine Sollbruchlinie, wie z. B. eine Perforation oder andere mechanische Schwächungen innerhalb der Abdeckung vorgesehen sein. Um diese Abdeckungen anzubringen und zu aktivieren, müssen zusätzliche Elemente montiert und miteinander in Eingriff gebracht werden.

Aufgabe der vorliegenden Erfindung ist es, eine Airbageinheit bereitzustellen, die kostengünstig und schnell herzustellen ist, ohne funktionale Nachteile aufzuweisen.

Erfindungsgemäß wird diese Aufgabe durch eine Airbageinheit mit den Merkmalen des Anspruchs 1 gelöst. Vorteilhafte Ausgestaltungen und Weiterbildungen der Erfindung sind in den Unteransprüchen beschrieben.

Die erfindungsgemäße Airbageinheit, die mit einem Airbag aus einem Gewebe ausgestattet ist, der mit einem Gasgenerator zum Aufblasen und Entfalten des Airbags aus einem eingerollten oder zusammengefalteten Zustand in einen entrollten oder entfalteten Aktivierungszustand gekoppelt ist und Befestigungseinrichtungen zur Festlegung des Airbags an einem Kraftfahrzeug aufweist, sieht vor, dass an dem Airbag im Bereich der Befestigungseinrichtungen ein Abdeckabschnitt angeordnet, bevorzugt daran befestigt ist, der im entrollten oder entfalteten Zustand nicht den gesamten Airbag überdeckt und mit dem Airbag eingerollt oder zusammengefaltet wird. Dadurch bildet der Abdeckbereich im eingerollten oder eingefalteten Zustand des Airbags eine Umhüllung aus, die das teure Airbaggewebe schützt, so dass keine Beschädigungen des Airbags während des Transportes oder während der Montage auftreten. Der Airbag wird dabei ausgehend von einer den Befestigungseinrichtungen abgewandten, bevorzugt gegenüberliegenden Seite des nicht aufgeblasenen Airbags eingrollt oder zusammengefaltet, wobei der Abdeckabschnitt auf der Außenseite des eingerollten Airbags angeordnet ist. Durch das gemeinsame Einrollen entfällt ein aufwendiges Vernähen überstehender Gewebeabschnitte, was Zeit und Kosten spart, gleichzeitig wird eine schützende Umhüllung durch den Abdeckabschnitt ausgebildet.

Eine Weiterbildung der Erfindung sieht vor, dass der Abdeckabschnitt an dem Airbag angenäht oder angeklebt ist, gegebenenfalls kann der Abdeckabschnitt auch an den Befestigungseinrichtungen, die beispielsweise als Laschen ausgebildet sein können, befestigt sein.

Der Airbag kann aus Gewebezuschnitten bestehen, die über eine Umfangsnaht miteinander verbunden sind. Alternativ ist es vorgesehen, dass der Airbag einstückig gewoben ist, wobei vorteilhafterweise der Abdeckabschnitt ebenfalls aus einem Gewebe besteht, das bevorzugt von dem Airbaggewebe verschieden ist. Da der Abdeckabschnitt bzw. der Gewebeabschnitt lediglich eine Schutzfunktion für den Transport und bei der Montage auszuüben hat und den Airbag gegebenenfalls beim Entfalten im Bereich der Befestigungseinrichtungen vor scharfkantigen Verkleidungen schützt, ist es nicht notwendig, das Gewebe aus dem hochwertigen Airbaggewebe auszubilden. Zur Gewährleistung der Schutzfunktion ist ein Gewebe oder ein Material geringerer Qualität ausreichend, was die Herstellung des Airbags verbilligt.

Um eine möglichst vollständige Umhüllung im eingerollten oder eingefalteten Zustand des Airbags zu gewährleisten, ist es vorgesehen, dass der Abdeckabschnitt bzw. Gewebeabschnitt sich über die gesamte Länge des eingerollten oder gefalteten Airbags erstreckt, wobei bevorzugt eine Breite für den Abdeckabschnitt vorgesehen ist, der mindestens dem Umfang des eingerollten Airbags entspricht. Dadurch ist gewährleistet, dass einerseits der Abdeckabschnitt die gesamte Länge des eingerollten Airbags abdeckt und andererseits der Airbag einmal von dem Abdeckabschnitt umgeben ist.

Um einerseits möglichst wenig Material für den Abdeckabschnitt zu verbrauchen und andererseits eine stabile Umhüllung zu gewährleisten, ist vorgesehen, dass die Breite des Abdeckabschnittes höchstens dem zweifachen Umfang des eingerollten Airbags entspricht. Dadurch wird der Abdeckabschnitt im eingerollten Zustand eingeklemmt und gehalten und kann sich nicht selbstständig abwickeln.

Um eine zusätzliche Sicherung und Fixierung zu gewährleisten, sind an dem Abdeckabschnitt Verschlusseinrichtungen angeordnet, über die der Airbag in der eingerollten Position gehalten wird. Diese Verschlusseinrichtungen können beispielsweise als Schlaufen, Klettverschlüsse, Knopfverbindungen, elastische Bänder oder Schellen ausgebildet sein. Ebenso ist es möglich, dass separate Fixiereinrichtungen wie elastische Bänder verwendet werden, um den eingerollten und mit einer Umhüllung versehenen Airbag in Position zu halten.

Um den Montageaufwand zu minimieren, ist der Abdeckabschnitt nur entlang einer Seite oder Kante, bevorzugt der Längskante einseitig an dem Airbag befestigt, beispielsweise an einer Umfangsnaht im Bereich der Befestigungseinrichtungen. So kann der Abdeckabschnitt zusammen mit dem Verschließen des Airbags in einem Arbeitsgang angenäht werden.

Nachfolgend wird ein Ausführungsbeispiel der Erfindung anhand der beigefügten Figuren näher erläutert. Es zeigen:
- Figur 1a -: eine Seitenansicht eines Airbags mit einem Abdeckabschnitt;
- Figur 1b -: eine Schnittdarstellung gemäß Linie B-B der Figur 1 a; sowie
- Figur 2 -: einen erfindungsgemäßen Airbag im eingerollten Zustand.

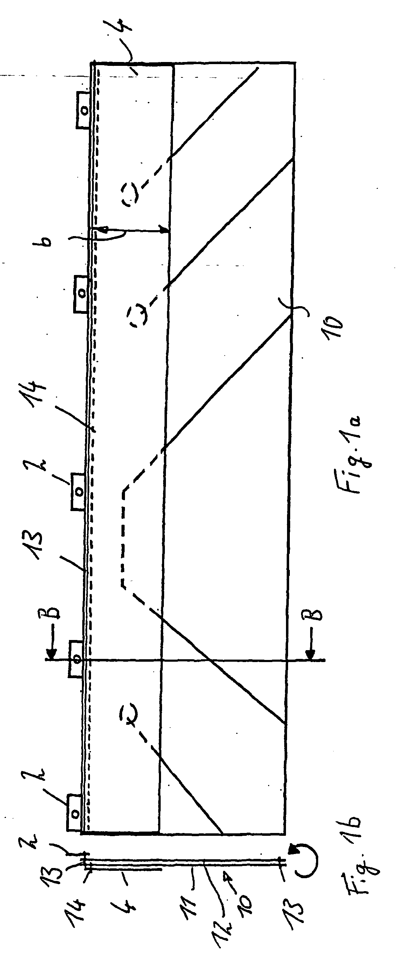

Der Figur 1a ist ein Airbag 10 im entfalteten oder entrollten, deaktivierten Zustand gezeigt. Der Airbag 10 hat vorliegend eine rechteckige Form. An der Oberkante des Airbags 10 sind Befestigungseinrichtungen 2 in Gestalt von Laschen angeordnet. Der Airbag 10 ist über eine Umfangsnaht 13 verschlossen und bildet eine Kammer aus, die über einen nicht dargestellten Gasgenerator, gegebenenfalls mit Deflektor- und Verteileinrichtungen, mit Gas befüllt werden kann. Auf der Oberseite des Airbags 10 ist über die gesamte Länge des Airbags 10 ein Abdeckabschnitt 4 in Gestalt eines Gewebes angeordnet und über eine Befestigungsnaht 14 befestigt. Der Abdeckabschnitt 4 kann aus einem Gewebe oder einem anderen, schützenden Material, beispielsweise Folie, ausgebildet sein, wobei die Breite b des Abdeckabschnittes 4 wesentlich kleiner als die Breite des Airbags 10 ist. Vorliegend beträgt die Breite b nur ungefähr 1/3 der Breite des Airbags 10.

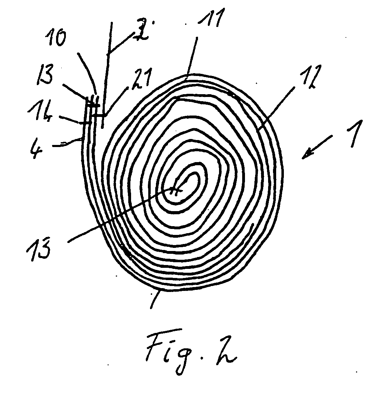

In der Figur 1b ist eine Schnittansicht gemäß der Linie B-B der Figur 1a gezeigt, aus der zu entnehmen ist, dass der Airbag 10 aus zwei Gewebeabschnitten 11, 12 besteht, die an der Oberkante und Unterkante über die Umfangsnaht 13 miteinander vernäht sind. Über die Befestigangsnaht 14 ist an der Oberseite des Airbags 10, also derjenigen Seite, die im eingerollten Zustand außen liegt, der Abdeckabschnitt 4 in Gestalt eines Gewebestreifens befestigt. Ebenfalls separat befestigt sind die Befestigungseinrichtungen 2, vorliegend zusammen mit der Umfangsnaht 13 an dem Airbag 10 angenäht. Um den Airbag 10 montagefertig herzustellen, wird dieser an dem den Befestigungseinrichtungen 2 gegenüberliegenden Ende beginnend eingerollt, wie durch den Pfeil angedeutet ist. Durch das Einrollen entgegen dem Uhrzeigersinn ergibt sich eine langgestreckte Rollenform, wie sie im Querschnitt in der Figur 2 dargestellt ist. Der Abdeckabschnitt 4 umgibt im eingerollten Zustand die Airbageinheit 1 zumindest einmal vollständig. Vorliegend ist die Breite b des Abdeckabschnittes 4 so gewählt, dass eine Überdeckung im Bereich eines halben Umfanges vorliegt, so dass der Abdeckabschnitt 4 mit eingerollt und einklemmt wird. Dadurch wird ein selbstständiges Abrollen oder Entfalten des Abdeckabschnittes 4 vermieden, und der Abdeckabschnitt wird selbstständig in Position gehalten. Ergänzend dazu können Verschlusseinrichtungen oder Gummibänder vorgesehen sein, die um den eingerollten Airbag geschlungen werden, um den dargestellten Zustand zu sichern.

In der Ausführungsform gemäß Figur 2 sind die Befestigungseinrichtungen 2 über eine separate Befestigungsnaht 21 an dem inneren Gewebeabschnitt 12 befestigt. Alternativ oder ergänzend können die Befestigungseinrichtungen 2 auch über die Umfangsnaht 13 befestigt sein. Der Abdeckabschnitt 4 ist ebenfalls über eine separate Befestigungsnaht 14 an dem äußeren Gewebeabschnitt 11 befestigt. Alternativ oder ergänzend kann eine Befestigung über die Umfangsnaht 13 im Bereich der Befestigungseinrichtungen 2 stattfinden.

Statt einer vollständigen Abdeckung im entfalteten Zustand mit entsprechend hohem Materialaufwand ist erfindungsgemäß nur eine teilweise Umhüllung im entfalteten oder entrollten Zustand vorgesehen, während im eingerollten oder eingefalteten Zustand eine vollständige Umhüllung gewährleistet ist. Der Abdeckabschnitt 4 bzw. der Gewebeabschnitt kann nur an einer Kante im Bereich der Befestigungseinrichtungen 2 fixiert sein, alternativ kann auch an den Schmalseiten eine Fixierung an dem Airbag 10 erfolgen. Die schützende Funktion des Abdeckabschnittes 4 kann auch von einem Gewebe oder einer Folie ausgeübt werden, das nicht die hohen mechanischen Eigenschaften des Airbaggewebes aufweist.

## Patentansprüche

1. Airbageinheit mit einem Airbag (10) aus einem Gewebe, der mit einem Gasgenerator zum Aufblasen und Entfalten des Airbags (10) aus einem eingerollten oder zusammengefalteten Zustand in einen entrollten oder entfalteten Aktivierungszustand gekoppelt ist, mit Befestigungseinrichtungen (2) zur Festlegung des Airbags (10) an einem Kraftfahrzeug, wobei der Airbag (10) ausgehend von einer den Befestigungseinrichtungen (2) gegenüberliegenden Seite des nicht aufgeblasenen Airbags (10) eingerollt oder zusammengefaltet ist, **dadurch gekennzeichnet, dass** im Bereich der Befestigungseinrichtungen (2) ein den Airbag (10) nicht vollständig überdeckender Abdeckabschnitt (4) an dem Airbag (10) befestigt ist, der im entrollten oder entfalteten Zustand mit dem Airbag (10) eingerollt wird und im eingerollten Zustand des Airbags (10) eine Umhüllung ausbildet.

2. Airbageinheit nach Anspruch 1, **dadurch gekennzeichnet, dass** der Abdeckabschnitt (4) an dem Airbag (10) angenäht oder angeklebt ist.

3. Airbageinheit nach Anspruch 1 oder 2, **dadurch gekennzeichnet, dass** der Airbag (10) aus Zuschnitten (11, 12) besteht, die über eine Umfangsnaht (13) miteinander verbunden sind.

4. Airbageinheit nach einem der voranstehenden Ansprüche, **dadurch gekennzeichnet, dass** der Abdeckabschnitt (4) aus einem Gewebe besteht.

5. Airbageinheit nach Anspruch 4, **dadurch gekennzeichnet, dass** das Gewebe von dem Airbaggewebe verschieden ist.

6. Airbageinheit nach einem der voranstehenden Ansprüche, **dadurch gekennzeichnet, dass** der Abdeckabschnitt (4) sich über die gesamte Länge des eingerollten oder gefalteten Airbags (10) erstreckt.

7. Airbageinheit nach einem der voranstehenden Ansprüche, **dadurch gekennzeichnet, dass** der Abdeckabschnitt (4) eine Breite (b) aufweist, die mindestens dem Umfang des eingerollten Airbags (10) entspricht.

8. Airbageinheit nach Anspruch 7, **dadurch gekennzeichnet, dass** die Breite (b) des Abdeckabschnittes (4) höchstens dem zweifachen Umfang des eingerollten Airbags (10) entspricht.

9. Airbageinheit nach der voranstehenden Ansprüche, **dadurch gekennzeichnet, dass** an dem Abdeckabschnitt (4) Verschlusseinrichtungen angeordnet sind, über die der Airbag (10) in der eingerollten Position gehalten wird.

10. Airbageinheit nach Anspruch 9, **dadurch gekennzeichnet, dass** die Verschlusseinrichtungen als Schlaufen, Klettverschlüsse, Knopfverbindungen, elastische Bänder oder Schellen ausgebildet sind.

11. Airbageinheit nach der voranstehenden Ansprüche, **dadurch gekennzeichnet, dass** der Abdeckabschnitt (4) nur entlang einer Seite an dem Airbag (10) befestigt ist.

## Claims

1. Airbag unit with an airbag (10) made of fabric, which is coupled to a gas generator for inflating and unfolding the airbag (10) from a rolled-up or folded-up state into an unrolled or unfolded activation state, comprising fastening devices (2) for fixing the airbag (10) to a motor vehicle, the airbag (10) being rolled-up or folded-up proceeding from a side of the non-inflated airbag (10) opposing the fastening devices (2), **characterised in that** a cover portion (4), which does not completely cover the airbag (10), is fastened to the airbag (10) in the region of the fastening devices (2) and is rolled-up with the airbag (10) in the unrolled or unfolded state and, when the airbag (10) is in the rolled-up state, forms a covering.

2. Airbag unit according to claim 1, **characterised in that** the cover portion (4) is sewn or glued to the airbag (10).

3. Airbag unit according to claim 1 or 2, **characterised in that** the airbag (10) consists of pre-cut parts (11, 12) which are connected to one another by means of a peripheral seam (13).

4. Airbag unit according to any one of the preceding claims, **characterised in that** the cover portion (4) consists of a fabric.

5. Airbag unit according to claim 4, **characterised in that** the fabric is different from the airbag fabric.

6. Airbag unit according to any one of the preceding claims, **characterised in that** the cover portion (4) extends over the entire length of the rolled-up or folded-up airbag (10).

7. Airbag unit according to any one of the preceding claims, **characterised in that** the cover portion (4) has a width (b) which corresponds at least to the periphery of the rolled-up airbag (10).

8. Airbag unit according to claim 7, **characterised in that** the width (b) of the cover portion (4) corresponds at most to twice the periphery of the rolled-up airbag (10).

9. Airbag unit according to the preceding claims, **characterised in that** closure devices, by means of which the airbag (10) is kept in the rolled-up position, are arranged on the cover portion (4).

10. Airbag unit according to claim 9, **characterised in that** the closure devices are configured as loops, hook-and-loop fasteners, button connections, elastic bands or clips.

11. Airbag unit according to any one of the preceding claims, **characterised in that** the cover portion (4) is only fastened to the airbag (10) along one side.

## Revendications

1. Unité airbag comprenant un airbag (10) en tissu, couplé à un générateur de gaz pour gonfler et déployer l'airbag (10) depuis un état enroulé ou replié vers un état d'activation déroulé ou déplié, comprenant un dispositif de fixation (2) pour fixer l'airbag (10) à un véhicule automobile, l'airbag (10) étant enroulé ou replié à partir d'un côté de l'airbag (10) non gonflé opposé au dispositif de fixation (2), **caractérisé en ce qu'**il est fixé à l'airbag (10) dans la zone du dispositif de fixation (2) une partie de recouvrement (4) ne recouvrant pas entièrement l'airbag (10), que l'on enroule avec l'airbag (10) dans l'état déroulé ou déplié et qui forme une enveloppe dans l'état enroulé de l'airbag.

2. Unité airbag selon la revendication 1, **caractérisée en ce que** la partie de recouvrement (4) est cousue ou collée à l'airbag (10).

3. Unité airbag selon la revendication 1 ou 2, **caractérisée en ce que** l'airbag (10) est constitué de pièces découpées (11, 12) qui sont reliées ensemble par une coutume périphérique (13).

4. Unité airbag selon l'une des revendications précédentes, **caractérisée en ce que** la partie de recouvrement (4) est constituée d'un tissu.

5. Unité airbag selon la revendication 4, **caractérisée en ce que** le tissu est différent du tissu de l'airbag.

6. Unité airbag selon l'une des revendications précédentes, **caractérisée en ce que** la partie de recouvrement (4) s'étend sur toute la longueur de l'airbag (10) enroulé ou replié.

7. Unité airbag selon l'une des revendications précédentes, **caractérisée en ce que** la partie de recouvrement (4) présente une largeur (b) qui correspond au moins au périmètre de l'airbag (10) enroulé.

8. Unité airbag selon la revendication 7, **caractérisée en ce que** la largeur (b) de la partie de recouvrement (4) correspond au maximum au double du périmètre de l'airbag (10) enroulé.

9. Unité airbag selon les revendications précédentes, **caractérisée en ce que** sur la partie de recouvrement (4) sont agencés des dispositifs de fermeture au moyen desquels l'airbag (10) est attaché dans la position enroulée.

10. Unité airbag selon la revendication 9, **caractérisée en ce que** les dispositifs de fermeture sont formés par des dragonnes, des fermetures auto-agrippantes, des liaisons à bouton, des bandes élastiques ou des colliers de serrage.

11. Unité airbag selon les revendications précédentes, **caractérisée en ce que** la partie de recouvrement (4) n'est fixée que le long d'un côté de l'airbag (10).
